# EUROPÄISCHE PATENTSCHRIFT

(11) **EP 3 279 539 B1**
(45) Veröffentlichungstag und Bekanntmachung des Hinweises auf die Patenterteilung: **24.03.2021**
(21) Anmeldenummer: 17183195.1
(22) Anmeldetag: 26.07.2017
(51) Int. Cl.: F16L 27/12, F16L 37/098, F16L 37/50

(54) **HALTEMANSCHETTE FÜR EINE VERBINDUNGSEINRICHTUNG**
RETENTION COLLAR FOR A CONNECTING DEVICE
POIGNÉE DE MAINTIEN POUR DISPOSITIF DE LIAISON

(30) Priorität: 04.08.2016 DE 102016114462
(43) Veröffentlichungstag der Anmeldung: 07.02.2018
(73) Patentinhaber: VERITAS AG, 63571 Gelnhausen (DE)
(72) Erfinder: HATTAß, Dirk, 63584 Gründau (DE); KARI, Artur, 63762 Großostheim (DE); GERIGK, Manuel, 63571 Gelnhausen (DE)
(74) Vertreter: Patentship Patentanwaltsgesellschaft mbH

(56) Entgegenhaltungen:
- EP-A1- 2 957 809
- DE-A1- 19 607 011
- JP-A- H06 174 163
- JP-A- H11 201 356
- US-A1- 2004 070 205
- US-B1- 6 443 501

## Beschreibung

Die vorliegende Erfindung betrifft eine Haltemanschette für eine Verbindungsvorrichtung zum Verbinden von fluidführenden Leitungen. Insbesondere betrifft die vorliegende Erfindung eine Verbindungsvorrichtung mit einer Haltemanschette zum Verbinden von einer ersten fluidführenden Leitung, insbesondere einer Ladeluftleitung, mit einer zweiten fluidführenden Leitung, insbesondere einer Ladeluftleitung.

In einem Kraftfahrzeug kommt eine Vielzahl von fluidführenden Leitungen in Form von Schläuchen, Rohren und dergleichen zum Einsatz, wie beispielsweise eine Ladeluftleitung zur Leitung von Luft in einem Kraftfahrzeug. Hierbei wird Luft durch die Ladeluftleitung zum Verbrennungsmotor gefördert, um eine Verbrennung eines Kraftstoffgemisches zu befördern. Herkömmlich verwendete Verbindungsvorrichtungen können durch eine Bewegung und/oder eine Verformung der fluidführenden Leitungen während eines Betriebs des Kraftfahrzeuges beschädigt werden.

In der DE 10 2013 012 369 A1 ist eine Kupplungsanordnung für Rohrleitungen mit einem Verriegelungselement offenbart.

In der US 2004/070205 A1 ist ein Endbereich eines ersten Leitungsendes, welches in einen Endbereich eines zweiten Leitungsendes eingeführt ist, beschrieben.

In der DE 196 07 011 A1 ist ein Endabschnitt eines Stecksystems, welcher in einen Endabschnitt einsteckbar ist, beschrieben.

In der US 6,443,501 B1 ist ein Rohrabschnitt eines ersten Rohrs, welcher in einen weiblichen Abschnitt eines zweiten Rohrs einsteckbar ist, beschrieben.

In der JP H06 174163 A ist ein Einführteil eines ersten Rohres, welches in einen gespreizten Bereich eines zweiten Rohres eingeführt ist, beschrieben.

In der JP H11 201356 A ist ein zylindrischen Körper, welcher in einen metallischen Körper einführbar ist, beschrieben.

In der EP 2 957 809 A1 ist ein Kupplungselement zur flexiblen Verbindung zweier Elemente zur Führung von Medien, umfassend ein erstes Bauteil zur Verbindung mit dem ersten Element und ein Bauteil zur Verbindung mit dem zweiten Element beschrieben.

Vor diesem Hintergrund stellt sich die Aufgabe eine Verbindungsvorrichtung für fluidführende Leitungen bereitzustellen, welche eine hohe Lebensdauer aufweist.

Diese Aufgabe wird durch den Gegenstand der unabhängigen Ansprüche gelöst. Vorteilhafte Ausführungsformen der Erfindung sind Gegenstand der abhängigen Ansprüche sowie der Figuren und der Beschreibung.

Gemäß einem ersten Aspekt der Erfindung wird die Aufgabe durch eine Haltemanschette für eine Verbindungsvorrichtung gelöst, wobei die Haltemanschette erste Haltevorsprünge aufweist, welche ausgebildet sind, in eine erste Verriegelungskontur an der Außenseite der ersten fluidführenden Leitung einzugreifen, und wobei die Haltemanschette zweite Haltevorsprünge aufweist, welche ausgebildet sind in eine zweite Verriegelungskontur an der Außenseite der zweiten fluidführenden Leitung einzugreifen, wobei die ersten Haltevorsprünge in die erste Verriegelungskontur und wobei die zweiten Haltevorsprünge in die zweite Verriegelungskontur eingreifen, um eine axiale Verschiebung des ersten Verbindungsabschnitts gegenüber dem zweiten Verbindungsabschnitt zu begrenzen, wobei zwischen den ersten Haltevorsprüngen jeweils erste Schlitze angeordnet, und wobei zwischen den zweiten Haltevorsprüngen jeweils zweite Schlitze angeordnet sind, wobei die ersten Haltevorsprünge versetzt gegenüber den zweiten Haltevorsprüngen angeordnet sind, und wobei die ersten Schlitze versetzt gegenüber den zweiten Schlitzen angeordnet sind, wobei die ersten Schlitze auf Höhe der zweiten Haltevorsprünge angeordnet sind und wobei die zweiten Schlitze auf Höhe der ersten Haltevorsprünge angeordnet sind.

Dadurch wird beispielsweise der technische Vorteil erreicht, dass die Haltemanschette eine besonders wirksame Fixierung des ersten und zweiten Verbindungsabschnitts sicherstellt.

Gemäß einer Ausführungsform der Erfindung wird die Aufgabe durch eine Verbindungsvorrichtung mit einer Haltemanschette nach dem ersten Aspekt zum Verbinden von fluidführenden Leitungen gelöst, mit einer ersten fluidführenden Leitung, welche einen ersten Verbindungsabschnitt aufweist, einer zweiten fluidführenden Leitung, welche einen zweiten Verbindungsabschnitt aufweist, wobei der zweite Verbindungsabschnitt in den ersten Verbindungsabschnitt axial einführbar ist, um eine fluidtechnische Verbindung zwischen der ersten und zweiten fluidführenden Leitung bereitzustellen.

Durch die Verwendung der Haltemanschette kann verhindert werden, dass sich der zweite Verbindungsabschnitt unbeabsichtigt von dem ersten Verbindungsabschnitt löst, und dadurch die fluidtechnische Verbindung zwischen der ersten fluidführenden Leitung und der zweiten fluidführenden Leitung getrennt wird.

Hierbei ist der zweite Verbindungsabschnitt der zweiten fluidführenden Leitung innerhalb des ersten Verbindungsabschnitts der ersten fluidführenden Leitung axial verschiebbar gelagert. Dadurch kann sichergestellt werden, dass z.B. bei auftretenden Vibrationen oder bei einem Erwärmen der fluidführenden Leitungen während des Betriebs die erste und zweite fluidführende Leitung gegeneinander axial verschoben werden können, ohne dass es zu einer Trennung der fluidtechnischen Verbindung zwischen den fluidführenden Leitungen kommt.

Die ersten und zweiten Haltevorsprünge der Haltemanschette greifen hierbei in die entsprechende erste und zweite Verriegelungskontur ein und begrenzen die axiale Verschiebung des ersten Verbindungsabschnitts gegenüber dem zweiten Verbindungsabschnitt. Somit wird ermöglicht, dass der zweite Verbindungsabschnitt in einem gewissen Ausmaß gegenüber dem ersten Verbindungsabschnitt verschoben werden kann. Es wird jedoch durch die Ausgestaltung der Haltemanschette verhindert, dass der zweite Verbindungsabschnitt vollständig aus dem ersten Verbindungsabschnitt herausgleiten kann und somit wird sichergestellt, dass die fluidtechnische Verbindung zwischen der ersten und zweiten fluidführenden Leitung nicht getrennt wird.

Gegenüber herkömmlichen Leitungshalterungen weist die erfindungsgemäße Haltemanschette den Vorteil auf, dass sie einfacher zu fertigen ist und mit einem geringen Aufwand montiert werden kann, wodurch eine signifikante Kostenreduktion ermöglicht wird. Zudem lässt sich die Haltemanschette mit einer Vielzahl von unterschiedlichen fluidführenden Leitungen benutzen, da die Stabilität der fluidtechnischen Verbindung nicht von dem Material der fluidführenden Leitungen abhängt. Ferner ist die Haltemanschette individuell an die jeweiligen fluidführenden Leitungen hinsichtlich verschiedenster Parameter anpassbar, insbesondere hinsichtlich des Toleranzbereichs der axialen Verschiebung, und insbesondere hinsichtlich der benötigten Temperaturbeständigkeit des Materials. Somit ergibt sich eine universelle Anwendbarkeit der Haltemanschette in verschiedensten Leitungssystemen.

In einer vorteilhaften Ausführungsform sind die Verbindungsabschnitte durch die Haltemanschette verschiebbar fixiert.

Dadurch wird der Vorteil erreicht, dass zum einen durch die Haltemanschette eine wirksame Fixierung der Verbindungsabschnitte sichergestellt wird, um ein Herausgleiten eines der Verbindungsabschnitte zu verhindern. Die verschiebbare Fixierung der Verbindungsabschnitte stellt auf der anderen Seite ein gewisses axiales Spiel sicher, so dass eine Verbiegung, bzw. Verformung, der Verbindungsabschnitte ausgeglichen werden kann.

In einer vorteilhaften Ausführungsform ist die Haltemanschette als eine die erste und zweite fluidführende Leitung umlaufende Haltemanschette ausgebildet, wobei die ersten Haltevorsprünge und die zweiten Haltevorsprünge auf entgegengesetzten Seiten der Haltemanschette angeordnet sind.

Dadurch wird der Vorteil erreicht, dass die umlaufende Haltemanschette eine gleichmäßige stabile Fixierung der Verbindungsabschnitte der fluidführenden Leitungen ermöglicht. Dadurch, dass die ersten und zweiten Haltevorsprünge auf entgegengesetzten Seiten der umlaufenden Haltemanschette angeordnet sind, können diese jeweils wirksam in die erste Verriegelungskontur der ersten fluidführenden Leitung und in die zweite Verriegelungskontur der zweiten fluidführenden Leitung eingreifen, und somit ein nicht beabsichtigtes Herausziehen der zweiten fluidführenden Leitung aus der ersten fluidführenden Leitung verhindern.

Erfindungsgemäß sind zwischen den ersten Haltevorsprüngen jeweils erste Schlitze angeordnet, und sind zwischen den zweiten Haltevorsprüngen jeweils zweite Schlitze angeordnet, wobei die ersten Haltevorsprünge versetzt gegenüber den zweiten Haltevorsprüngen angeordnet sind, und wobei die ersten Schlitze versetzt gegenüber den zweiten Schlitzen angeordnet sind.

Dadurch wird beispielsweise der technische Vorteil erreicht, dass durch das Ausbilden von Schlitzen zwischen den jeweiligen Haltevorsprüngen eine ausreichende radiale Bewegungslänge bei der Montage der Haltemanschette sichergestellt werden kann. Bei einer möglichst langen Schlitzlänge kann ein möglichst langer Hebelarm bei der Montage der Haltemanschette sichergestellt werden. Somit kann eine ausreichende Stabilität der Haltemanschette gewährleistet werden. Durch die versetzte Anordnung der ersten Haltevorsprünge gegenüber den zweiten Haltevorsprüngen, bzw. der ersten Schlitze gegenüber den zweiten Schlitzen kann die Stabilität der Haltemanschette verbessert werden.

In einer vorteilhaften Ausführungsform sind in den ersten und zweiten Schlitzen Kunststofflagen angeordnet, wobei die Kunststofflagen ausgebildet sind, die Schlitze gegenüber einer Außenseite der ersten fluidführenden Leitung oder gegenüber einer Außenseite der zweiten fluidführenden Leitung fluidtechnisch abzudichten, wobei die Kunststofflagen insbesondere ein thermoplastisches Elastomer (TPE) umfassen.

Dadurch wird beispielsweise der technische Vorteil erreicht, dass durch die Kunststofflagen eine besonders wirksame fluidtechnische Abdichtung zwischen der Haltemanschette und der ersten, bzw. zweiten fluidtechnischen Leitung sichergestellt werden kann. Dadurch kann bei einer axialen Verschiebung des ersten Verbindungsabschnitts gegenüber dem zweiten Verbindungsabschnitt verhindert werden, dass Verunreinigungen von außerhalb der fluidtechnischen Leitungen in den Verbindungsbereich zwischen der ersten und zweiten fluidtechnischen Leitung eindringen können. Dadurch kann eine wirksame dichtende Verbindung sichergestellt werden, und insbesondere Beschädigungen eines Dichtrings verhindert werden.

In einer vorteilhaften Ausführungsform ist die Verbindung zwischen den ersten Haltevorsprüngen und der ersten Verriegelungskontur und/oder ist die Verbindung zwischen den zweiten Haltevorsprüngen und der zweiten Verriegelungskontur als eine formschlüssige Verbindung, insbesondere als eine Rastverbindung, ausgebildet.

Dadurch wird beispielsweise der technische Vorteil erreicht, dass durch die formschlüssige Verbindung, insbesondere Rastverbindung, eine besonders wirksame Fixierung der fluidtechnischen Verbindung zwischen der ersten und zweiten fluidführenden Leitung sichergestellt werden kann. Dadurch kann sichergestellt werden, dass die ersten und zweiten Haltevorsprünge wirksam in die jeweiligen Verriegelungskonturen eingreifen, um eine axiale Verschiebung des ersten Verbindungsabschnitts gegenüber dem zweiten Verbindungsabschnitt zu begrenzen.

In einer vorteilhaften Ausführungsform weist der zweite Verbindungsabschnitt an einer Außenseite einen umlaufenden Dichtungssteg auf, wobei der umlaufende Dichtungssteg an der dem ersten Verbindungsabschnitt zugewandten Seite insbesondere abgerundet ist, und weist der zweite Verbindungsabschnitt an der Außenseite einen weiteren umlaufenden Dichtungssteg auf, wobei zwischen dem umlaufenden Dichtungssteg und dem weiteren umlaufenden Dichtungssteg ein den zweiten Verbindungsabschnitt umlaufender Dichtungsring angeordnet ist.

Dadurch wird beispielsweise der technische Vorteil erreicht, dass durch den umlaufenden Dichtungssteg an der Außenseite des zweiten Verbindungsabschnitts sichergestellt wird, dass wenn der zweite Verbindungsabschnitt in den ersten Verbindungsabschnitt eingeführt ist, eine wirksame fluiddichte Verbindung zwischen der ersten fluidführenden Leitung und der zweiten fluidführenden Leitung bereitgestellt werden kann. Durch die Abrundung des umlaufenden Dichtungsstegs an der dem ersten Verbindungsabschnitt zugewandten Seite wird ein Kippen des zweiten Verbindungsabschnitts gegenüber dem ersten Verbindungsabschnitt ermöglicht, wodurch ein Toleranzausgleich bei einem Verformen der ersten oder zweiten fluidführenden Leitung ermöglicht wird. Je nach Anwendungsfall kann die zweite fluidführende Leitung gegenüber der ersten fluidführenden Leitung in beide Richtungen jeweils um bis zu 5° gekippt werden. Dadurch kann vermieden werden, dass bei hohen Drücken und hohen Temperaturen des durch die fluidführenden Leitungen geleiteten Fluids das Fluid aus der fluidtechnischen Verbindung austritt.

In einer vorteilhaften Ausführungsform umfasst die Verbindungsvorrichtung ferner einen Kunststoffschlauch, welcher über die mit dem ersten und zweiten Verbindungsabschnitt verbundene Haltemanschette aufgezogen wird.

Dadurch wird beispielsweise der technische Vorteil erreicht, dass durch den Kunststoffschlauch, welcher insbesondere einen Schrumpfschlauch oder eine Gummisocke umfassen kann, ein Eindringen von Verunreinigungen in die Verbindung zwischen dem ersten und zweiten Verbindungsabschnitt verhindert wird, wodurch eine Beschädigung der Dichtung vermieden werden kann. Der Kunststoffschlauch wird hierbei über die erste und zweite fluidführende Leitung aufgezogen, so dass der Kunststoffschlauch sowohl den ersten und zweiten Verbindungsabschnitt, als auch die Haltemanschette wirksam umschließt.

In einer vorteilhaften Ausführungsform weist die Haltemanschette ferner eine Kunststoffdichtung auf, welche stoffschlüssig mit der Haltemanschette verbunden ist, wobei die Kunststoffdichtung insbesondere ein thermoplastisches Elastomer (TPE) umfasst.

Dadurch wird beispielsweise der technische Vorteil erreicht, dass durch die stoffschlüssig mit der Haltemanschette verbundene Kunststoffdichtung die Haltemanschette besonders wirksam gegenüber einer Außenseite des ersten Verbindungsabschnitts, bzw. gegenüber einer Außenseite des zweiten Verbindungsabschnitts fluidtechnisch abgedichtet werden kann. Eine stoffschlüssig mit der Haltemanschette verbundene Kunststoffdichtung kann insbesondere eine an die Haltemanschette angespritzte Kunststoffdichtung umfassen.

In einer vorteilhaften Ausführungsform weist die erste fluidführende Leitung einen ersten Leitungsabschnitt mit einem ersten Durchmesser auf, wobei der erste Verbindungsabschnitt einen weiteren ersten Durchmesser aufweist, und wobei der weitere erste Durchmesser größer als der erste Durchmesser ist.

Dadurch wird beispielsweise der technische Vorteil erreicht, dass durch den weiteren ersten Durchmesser des ersten Verbindungsabschnitts, welcher größer als der erste Durchmesser des ersten Leitungsabschnitts ist, die radiale Aufweitung des ersten Verbindungsabschnitts gegenüber dem ersten Leitungsabschnitt ein Einschieben des zweiten Verbindungsabschnitts in den ersten Verbindungsabschnitt ermöglicht, um eine wirksame fluidtechnische Verbindung zwischen der ersten fluidführenden Leitung und der zweiten fluidführenden Leitung bereitzustellen.

In einer vorteilhaften Ausführungsform weist die zweite fluidführende Leitung einen zweiten Leitungsabschnitt mit einem zweiten Durchmesser auf, wobei der zweite Verbindungsabschnitt einen weiteren zweiten Durchmesser aufweist, wobei der weitere zweite Durchmesser insbesondere geringer als der zweite Durchmesser ist.

Dadurch wird beispielsweise der technische Vorteil erreicht, dass durch den weiteren zweiten Durchmesser des zweiten Verbindungsabschnitts, welcher insbesondere geringer als der zweite Durchmesser des zweiten Leitungsabschnitts ist, die radiale Verengung des zweiten Verbindungsabschnitts gegenüber dem zweiten Leitungsabschnitt ein Einschieben des zweiten Verbindungsabschnitts in den ersten Verbindungsabschnitt ermöglicht, um eine wirksame fluidtechnische Verbindung zwischen der ersten fluidführenden Leitung und der zweiten fluidführenden Leitung bereitzustellen. Hierbei kann der erste Durchmesser des ersten Leitungsabschnitts insbesondere dem zweiten Durchmesser des zweiten Leitungsabschnitts entsprechen, wodurch ein gleichbleibender Durchmesser der ersten und zweiten fluidführenden Leitungen zumindest im Bereich des ersten und zweiten Leitungsabschnitts sichergestellt werden kann. Um ein wirksames Einführen des zweiten Verbindungsabschnitts in den ersten Verbindungsabschnitt zu ermöglichen, ist der weitere zweite Durchmesser des zweiten Verbindungsabschnitts insbesondere geringer als der weitere erste Durchmesser des ersten Verbindungsabschnitts.

In einer vorteilhaften Ausführungsform weist der erste Verbindungsabschnitt an einer Innenseite einen Anschlag auf, wobei eine Stirnseite des in den ersten Verbindungsabschnitt eingeführten zweiten Verbindungsabschnitts an dem Anschlag anliegt, um das Einschieben des zweiten Verbindungsabschnitts in den ersten Verbindungsabschnitt zu begrenzen.

Dadurch wird beispielsweise der technische Vorteil erreicht, dass der Anschlag an der Innenseite des ersten Verbindungsabschnitts das Einschieben des zweiten Verbindungsabschnitts in den ersten Verbindungsabschnitt begrenzt. Dadurch kann der zweite Verbindungsabschnitt nur bis zu einem Anliegen der Stirnseite des zweiten Verbindungsabschnitts an dem Anschlag in den ersten Verbindungsabschnitt eingeführt werden. Somit kann der zweite Verbindungsabschnitt nicht unbegrenzt in den ersten Verbindungsabschnitt eingeschoben werden, wodurch eine wirksame fluidtechnische Verbindung zwischen der ersten fluidführenden Leitung und der zweiten fluidführenden Leitung sichergestellt werden kann.

In einer vorteilhaften Ausführungsform sind an der ersten Verriegelungskontur erste Sicherungsstifte angeordnet, sind an der zweiten Verriegelungskontur zweite Sicherungsstifte angeordnet, und sind die ersten und zweiten Sicherungsstifte ausgebildet, ein radiales Drehen der Haltemanschette an der Verbindungsvorrichtung zu verhindern.

Dadurch wird beispielsweise der technische Vorteil erreicht, dass die ersten und zweiten Sicherungsstifte verhindern, dass die Haltemanschette an der Verbindungsvorrichtung radial verdreht werden kann. Hierbei werden die ersten und zweiten Sicherungsstifte insbesondere jeweils zwischen den ersten und zweiten Haltevorsprüngen eingeführt und sichern damit die Position der ersten und zweiten Haltevorsprünge hinsichtlich einer radialen Verdrehung der Haltemanschette.

In einer vorteilhaften Ausführungsform umfasst die Haltemanschette einen thermoplastischen Kunststoff, insbesondere ein Polyamid, Nylon, Polyphenylensulfid oder Mischungen davon.

Dadurch wird beispielsweise der technische Vorteil erreicht, dass die Verwendung eines thermoplastischen Kunststoffs, insbesondere Polyamid, Nylon, Polyphenylensulfid oder Mischungen davon, zum einen eine besonders vorteilhafte Herstellbarkeit der Haltemanschette gewährleistet und zum anderen eine ausreichende Stabilität der Haltemanschette sicherstellt, um einer Beschädigung der Haltemanschette bei hohen Temperaturen und hohen Drücken des durch die fluidführende Leitung geleiteten Fluids vorzubeugen.

Ausführungsbeispiele der Erfindung sind in den Zeichnungen dargestellt und werden im Folgenden näher beschrieben.

Es zeigen:
- Fig. 1: eine Explosionsdarstellung einer Verbindungsvorrichtung zum Verbinden von fluidführenden Leitungen;
- Fig. 2: eine Schnittdarstellung einer Verbindungsvorrichtung zum Verbinden von fluidführenden Leitungen in einer ersten Verbindungsposition; und
- Fig. 3: eine Schnittdarstellung einer Verbindungsvorrichtung zum Verbinden von fluidführenden Leitungen in einer weiteren Verbindungsposition.

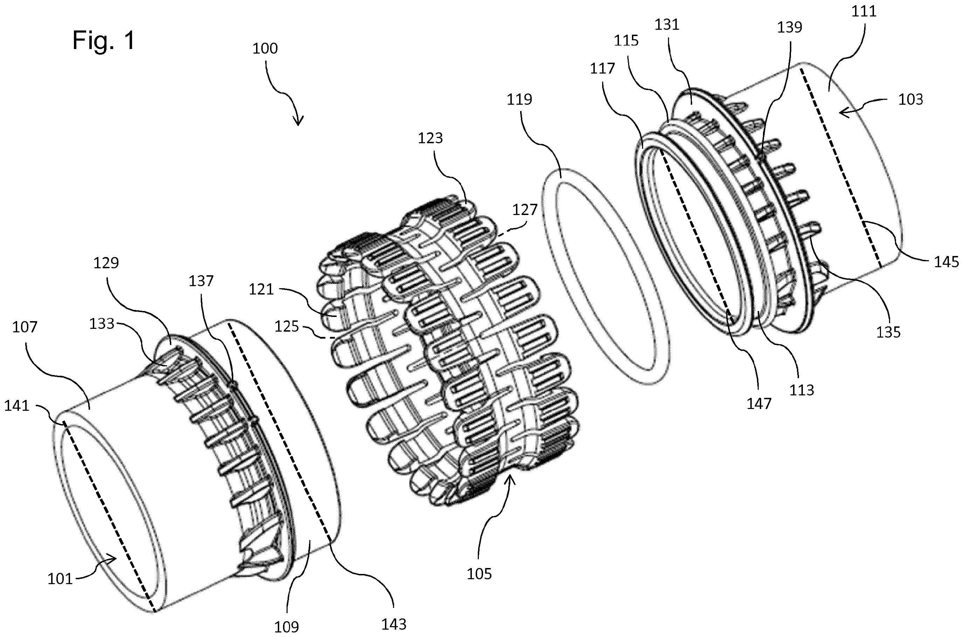

Die Figuren 1, 2 und 3 zeigen verschiedene Ansichten einer Verbindungsvorrichtung zum Verbinden von fluidführenden Leitungen, wobei die fluidführenden Leitungen insbesondere als Leitungen zum Leiten von Luft ausgebildet sind, beispielsweise in einem Kraftfahrzeug.

In Figur 1 ist eine Seitenansicht einer an eine Fluidleitung angeschlossene Verbindungsvorrichtung zum Verbinden von fluidführenden Leitungen in einer Explosionsdarstellung dargestellt. Die Verbindungsvorrichtung 100 umfasst eine erste fluidführende Leitung 101, eine zweite fluidführende Leitung 103 und eine Haltemanschette 105. Durch die erste und zweite fluidführende Leitung 101, 103 kann ein Fluid, insbesondere Luft, geleitet werden.

Die erste fluidführende Leitung 101 weist einen ersten Leitungsabschnitt 107 und einen ersten Verbindungsabschnitt 109 auf. Die zweite fluidführende Leitung 103 weist einen zweiten Leitungsabschnitt 111 und einen zweiten Verbindungsabschnitt 113 auf. Hierbei weist der zweite Verbindungsabschnitt 113 an einer Außenseite einen umlaufenden Dichtungssteg 115 und einen weiteren umlaufenden Dichtungssteg 117 auf, wobei zwischen dem umlaufenden Dichtungssteg 115 und dem weiteren umlaufenden Dichtungssteg 117 ein umlaufender Dichtungsring 119 angeordnet ist.

Wie in der Fig. 1 nicht dargestellt ist, wird um eine fluidtechnische Verbindung zwischen der ersten und zweiten fluidführenden Leitung 101, 103 bereitzustellen, der zweite Verbindungsabschnitt 113 der zweiten fluidführenden Leitung 103 in den ersten Verbindungsabschnitt 109 der ersten fluidführenden Leitung 101 axial eingeführt.

Die Haltemanschette 105 fixiert den ersten und zweiten Verbindungsabschnitt 109, 113 und umfasst insbesondere einen thermoplastischen Kunststoff, wie z.B. Polyamid (PA), Nylon, Polyphenylensulfid oder Mischungen davon. Hierbei ist die Haltemanschette 105 als eine die erste und zweite fluidführende Leitung 101, 103 umlaufende Haltemanschette 105 ausgebildet. Die Haltemanschette 105 weist erste Haltevorsprünge 121 und zweite Haltevorsprünge 123 auf, welche auf entgegengesetzten Seiten der Haltemanschette 105 angeordnet sind.

Zwischen den ersten Haltevorsprüngen 121 sind jeweils erste Schlitze 125 und zwischen den zweiten Haltevorsprüngen 123 sind jeweils zweite Schlitze 127 angeordnet. Die ersten Haltevorsprünge 121 sind versetzt gegenüber den zweiten Haltevorsprüngen 123 angeordnet. Die ersten Schlitze 125 sind versetzt gegenüber den zweiten Schlitzen 127 angeordnet. Die ersten Schlitze 125 sind auf Höhe der zweiten Haltevorsprünge 123 angeordnet und die zweiten Schlitze 127 sind auf Höhe der ersten Haltevorsprünge 121 angeordnet. Hierbei können zur fluidtechnischen Abdichtung in den ersten und zweiten Schlitzen 125, 127 Kunststofflagen angeordnet sein, welche insbesondere ein thermoplastisches Elastomer (TPE) umfassen.

Eine Außenseite des ersten Verbindungsabschnitts 109 der ersten fluidführenden Leitung 101 weist eine erste Verriegelungskontur 129 auf, in welche die ersten Haltevorsprünge 121 eingreifen können. Die Außenseite des zweiten Verbindungsabschnitts 113 der zweiten fluidführenden Leitung 103 weist eine zweite Verriegelungskontur 131 auf, in welche die zweiten Haltevorsprünge 123 eingreifen können. Durch das Eingreifen der ersten und zweiten Haltevorsprünge 121, 123 in die jeweilige erste und zweite Verriegelungskontur 129, 131 auf unterschiedlichen Seiten der fluidtechnischen Verbindung zwischen der ersten und zweiten fluidführenden Leitung 101, 103 kann ein wirksames Fixieren der Verbindungsabschnitte 109, 113 innerhalb der Verbindungsvorrichtung 100 durch die Haltemanschette 105 sichergestellt werden. Die Verbindung zwischen den ersten und zweiten Haltevorsprünge 121, 123 und der ersten und zweiten Verriegelungskontur 129, 131 kann eine formschlüssige oder kraftschlüssige Verbindung umfassen, insbesondere eine Rastverbindung. Dadurch wird verhindert, dass sich die Verbindung zwischen den fluidführenden Leitungen 101, 103 unbeabsichtigt löst.

Da die fluidführenden Leitungen 101, 103, insbesondere Ladeluftschläuche, bei einer besonders engen Bauraumsituation in Kraftfahrzeugen oftmals axial gestreckt oder komprimiert werden, bzw. die fluidführenden Leitungen 101, 103 an der Verbindung zwischen den fluidführenden Leitungen 101, 103 gebogen werden, ermöglicht die Haltemanschette 105 eine gewisse Flexibilität der fluidführenden Leitungen 101, 103.

Hierbei greifen die ersten Haltevorsprünge 121 in die erste Verriegelungskontur 129 ein und greifen die zweiten Haltevorsprünge 123 in die zweite Verriegelungskontur 131 ein, um eine axiale Verschiebung des ersten Verbindungsabschnitts 109 gegenüber dem zweiten Verbindungsabschnitt 113 zu begrenzen. Durch das Eingreifen der Haltevorsprünge 121, 123 in die entsprechenden Verriegelungskonturen 129, 131 kann somit verhindert werden, dass der zweite Verbindungsabschnitt 113 der zweiten fluidführenden Leitung 103 aus dem ersten Verbindungsabschnitt 109 der ersten fluidführenden Leitung 101 während des Betriebs herausgezogen wird. Somit kann verhindert werden, dass die fluidtechnische Verbindung zwischen den fluidführenden Leitungen 101, 103 unbeabsichtigt gelöst wird.

Wird der zweite Verbindungsabschnitt 113 jedoch vollständig bis zum Anschlag in den ersten Verbindungsabschnitt 109 eingeführt, liegen die Haltevorsprünge 121, 123 nicht vollständig an den entsprechenden Verriegelungskonturen 129, 131 an. Somit kann der zweite Verbindungsabschnitt 113 innerhalb des ersten Verbindungsabschnitts 109 bis zu einem gewissen Maße axial verschoben, was eine erhöhte Flexibilität der Verbindung zwischen der ersten fluidführenden Leitung 101 und der zweiten fluidführenden Leitung 103 ermöglicht.

Ferner weist der umlaufende Dichtungssteg 115 an der Außenseite des zweiten Verbindungsabschnitts 113 eine abgerundete Oberfläche auf. Wenn der zweite Verbindungsabschnitt 113 in den ersten Verbindungsabschnitt 109 eingeführt ist, liegt die abgerundete Oberfläche an einer Innenseite des ersten Verbindungsabschnitts 109 an. Dadurch kann ein Kippen der beiden fluidführenden Leitungen 101, 103 innerhalb der Verbindungsvorrichtung 100 bis zu einem Winkel von ca. 5° ermöglicht werden, wodurch eine besonders vorteilhafte Flexibilität der Verbindungsvorrichtung 100 sichergestellt werden kann.

Die erste Verriegelungskontur 129 ist durch erste Stabilisierungsstützen 133 an dem ersten Verbindungsabschnitt 109 stabilisiert. Die zweite Verriegelungskontur 131 ist durch zweite Stabilisierungsstützen 135 an dem zweiten Verbindungsabschnitt 113 stabilisiert. An der ersten Verriegelungskontur 129 sind erste Sicherungsstifte 137 und an der zweiten Verriegelungskontur 131 sind zweite Sicherungsstifte 139 angeordnet. Die ersten Sicherungsstifte 137 werden in die ersten Schlitze 125 aufgenommen und die zweiten Sicherungsstifte 139 werden in die zweiten Schlitze 127 aufgenommen, um eine radiale Drehung der Haltemanschette 105 zu verhindern.

Der erste Leitungsabschnitt 107 weist einen ersten Durchmesser 141 auf und der erste Verbindungsabschnitt 109 weist einen weiteren ersten Durchmesser 143 auf, welcher größer als der erste Durchmesser 141 ist. Damit der zweite Verbindungsabschnitt 113 wirksam in den ersten Verbindungsabschnitt 109 eingeführt werden kann, weist der zweite Leitungsabschnitt 111 einen zweiten Durchmesser 145 und weist der zweite Verbindungsabschnitt 113 einen weiteren zweiten Durchmesser 147 auf, wobei der weitere zweite Durchmesser 147 geringer als der weitere erste Durchmesser 143 ist. Hier entspricht der erste Durchmesser 141 insbesondere dem zweiten Durchmesser 145, wodurch ein gleichbleibender Durchmesser 141, 145 der miteinander verbundenen ersten und zweiten fluidführenden Leitung 101, 103 sichergestellt werden kann.

Ferner kann die Verbindungsvorrichtung 100 einen in Fig. 1 nicht dargestellten Kunststoffschlauch umfassen, welcher über die mit dem ersten und zweiten Verbindungsabschnitt 109, 113 verbundene Haltemanschette 105 aufgezogen wird. Dadurch kann ein Eindringen von Verunreinigungen in die Haltemanschette 105 an der Verbindungsvorrichtung 100 verhindert werden.

Zudem kann die Haltemanschette 105 eine Kunststoffdichtung umfassen, welche stoffschlüssig mit der Haltemanschette 105 verbunden ist, wobei die Kunststoffdichtung insbesondere ein thermoplastisches Elastomer (TPE) umfasst, um eine wirksame Abdichtung bereitzustellen.

Durch eine signifikante konstruktionstechnische Vereinfachung der verwendeten Bauteile und einer Erleichterung der Montage wird eine besonders kostengünstige Verbindungsvorrichtung 100 bereitgestellt. Zudem kann die Haltemanschette 105 an fluidführenden Leitungen 101, 103 befestigt werden, welche aus einer Vielzahl von unterschiedlichen Materialien bestehen, so dass die Haltemanschette 105 nicht nur bei verschiedenen Ladeluftschläuchen in Kraftfahrzeugen unterschiedlicher Hersteller eingesetzt werden kann, sondern sich auch zur Verbindung einer Vielzahl von unterschiedlichen fluidführenden Leitungen eignet. Dadurch wird eine universelle Einsetzbarkeit der Haltemanschette 105 sichergestellt. Zudem kann durch eine konstruktionstechnische Ausgestaltung der Haltemanschette 105 die Verbindungsvorrichtung 100 individuell an die entsprechenden zu verbindenden fluidführenden Leitungen angepasst werden, um beispielweise einen zulässigen axialen Toleranzbereich an die Bauraumsituation oder an die Temperaturen des in den fluidführenden Leitungen geleiteten Fluids anzupassen.

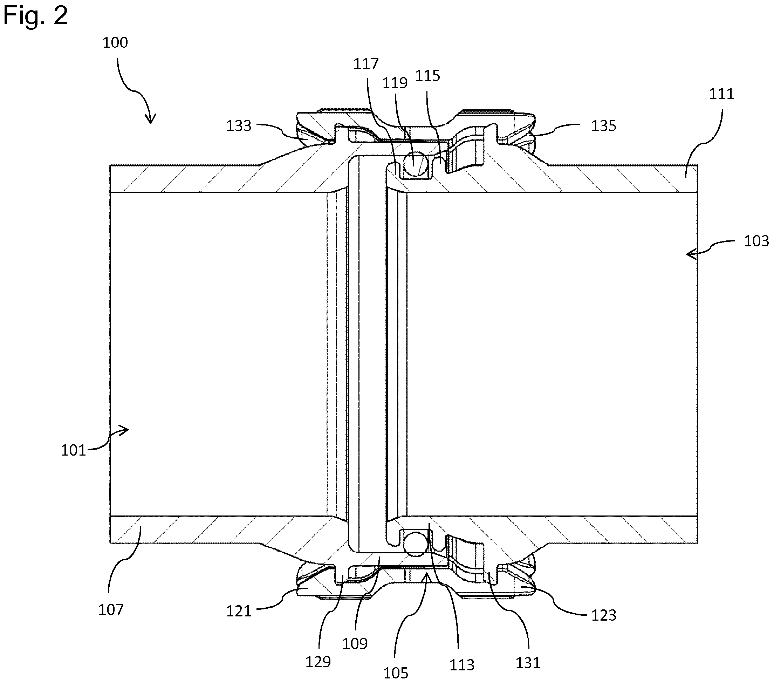

In Figur 2 ist eine Schnittdarstellung einer Verbindungsvorrichtung zum Verbinden von fluidführenden Leitungen in einer ersten Verbindungsposition dargestellt. Die Verbindungsvorrichtung 100 umfasst eine erste fluidführende Leitung 101 mit einem ersten Leitungsabschnitt 107 und einem ersten Verbindungsabschnitt 109, wobei an einer Außenseite der ersten fluidführenden Leitung 101 eine erste Verriegelungskontur 129 angeordnet ist. Die Verbindungsvorrichtung 100 umfasst eine zweite fluidführende Leitung 103 mit einem zweiten Leitungsabschnitt 111 und einem zweiten Verbindungsabschnitt 113, wobei an einer Außenseite der zweiten fluidführenden Leitung 103 eine zweite Verriegelungskontur 131 angeordnet ist. Der zweite Verbindungsabschnitt 113 ist in den ersten Verbindungsabschnitt 109 axial eingeführt, um eine fluidtechnische Verbindung zwischen der ersten fluidführenden Leitung 101 und der zweiten fluidführenden Leitung 103 bereit zu stellen.

In der Fig. 2 sind ferner erste Stabilisierungsstützen 133 zum Stabilisieren der ersten Verriegelungskontur 129 dargestellt und zweite Stabilisierungsstützen 135 zum Stabilisieren der zweiten Verriegelungskontur 131 dargestellt.

Die Verriegelungsvorrichtung 100 umfasst ferner eine Haltemanschette 105 mit ersten Haltevorsprüngen 121, welche in die erste Verriegelungskontur 129 eingreifen und mit zweiten Haltevorsprüngen 123, welche in die zweite Verriegelungskontur 131 eingreifen, um eine axiale Verschiebung des ersten Verbindungsabschnitts 109 gegenüber dem zweiten Verbindungsabschnitt 113 zu begrenzen. Durch das Eingreifen der Haltevorsprünge 121, 123 in die entsprechenden Verriegelungskonturen 129, 131 kann somit verhindert werden, dass der zweite Verbindungsabschnitt 113 der zweiten fluidführenden Leitung 103 aus dem ersten Verbindungsabschnitt 109 der ersten fluidführenden Leitung 101 herausgezogen wird, wodurch verhindert wird, dass die fluidtechnische Verbindung zwischen den fluidführenden Leitungen 101, 103 gelöst wird.

Der zweite Verbindungsabschnitt 113 weist an der Außenseite einen umlaufenden Dichtungssteg 115 und einen weiteren umlaufenden Dichtungssteg 117 auf, wobei zwischen dem umlaufenden Dichtungssteg 115 und dem weiteren umlaufenden Dichtungssteg 117 ein umlaufender Dichtungsring 119 angeordnet ist. Der umlaufende Dichtungssteg 115 ist an seiner Oberfläche abgerundet und liegt an einer Innenseite des ersten Verbindungsabschnitts 109 an und ermöglicht ein Kippen der fluidführenden Leitungen 101, 103 gegeneinander.

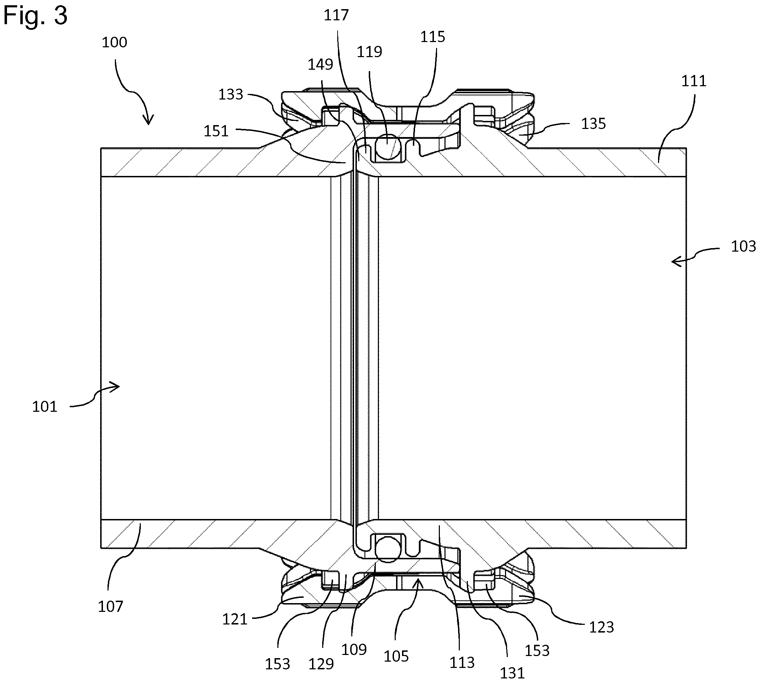

In Figur 3 ist eine Schnittdarstellung einer Verbindungsvorrichtung zum Verbinden von fluidführenden Leitungen in einer weiteren Verbindungsposition dargestellt. Die Verbindungsvorrichtung 100 umfasst eine erste fluidführende Leitung 101 mit einem ersten Leitungsabschnitt 107 und einem ersten Verbindungsabschnitt 109, wobei an einer Außenseite der ersten fluidführenden Leitung 101 eine erste Verriegelungskontur 129 angeordnet ist. Die Verbindungsvorrichtung 100 umfasst eine zweite fluidführende Leitung 103 mit einem zweiten Leitungsabschnitt 111 und einem zweiten Verbindungsabschnitt 113, wobei an einer Außenseite der zweiten fluidführenden Leitung 103 eine zweite Verriegelungskontur 131 angeordnet ist.

Im Gegensatz zu der in Fig. 2 gewählten Darstellung ist in der Fig. 3 der zweite Verbindungsabschnitt 113 vollständig in den ersten Verbindungsabschnitt 109 axial eingeführt, um eine fluidtechnische Verbindung zwischen der ersten fluidführenden Leitung 101 und der zweiten fluidführenden Leitung 103 bereit zu stellen. Hierbei liegt eine Stirnseite 149 des zweiten Verbindungsabschnitts 113 an einem Anschlag 151 des ersten Verbindungsabschnitts 109 an, so dass der zweite Verbindungsabschnitt 113 nicht weiter in den ersten Verbindungsabschnitt 109 axial eingeführt werden kann.

Der zweite Verbindungsabschnitt 113 weist an der Außenseite einen umlaufenden Dichtungssteg 115 und einen weiteren umlaufenden Dichtungssteg 117 auf, wobei zwischen dem umlaufenden Dichtungssteg 115 und dem weiteren umlaufenden Dichtungssteg 117 ein umlaufender Dichtungsring 119 angeordnet ist. Der umlaufende Dichtungssteg 115 ist an seiner Oberfläche abgerundet und liegt an einer Innenseite des ersten Verbindungsabschnitts 109 an und ermöglicht ein Kippen der fluidführenden Leitungen 101, 103 gegeneinander.

Durch das vollständige Einschieben des zweiten Verbindungsabschnitts 113 in den ersten Verbindungsabschnitts 109 liegen die ersten Haltevorsprünge 121 und die zweiten Haltevorsprünge 123 der Haltemanschette 105 nicht vollständig an der ersten, bzw. zweiten Verriegelungskontur 129, 131 an. Somit befindet sich in der in Fig. 3 dargestellten weiteren Verbindungsposition zwischen den ersten Haltevorsprüngen 121 und der ersten Verriegelungskontur 129, sowie zwischen den zweiten Haltevorsprüngen 123 und der zweiten Verriegelungskontur 131 jeweils ein Halteabstand 153. Der Halteabstand 153 stellt eine geringe axiale Verschiebung der Verbindungsabschnitte 109, 113 gegeneinander sicher, wodurch eine Flexibilität der fluidtechnischen Verbindung sichergestellt wird.

Da der zweite Verbindungsabschnitt 113 vollständig in den ersten Verbindungsabschnitt 109 eingeschoben ist, wird eine stabile fluidtechnische Verbindung zwischen der ersten fluidführenden Leitung 101 und der zweiten fluidführenden Leitung 103 bereitgestellt, ohne dass die Haltevorsprünge 121, 123 an der entsprechenden Verriegelungskontur 129, 131 anliegen müssen, um eine stabile Verbindung zwischen den beiden fluidführenden Leitungen 101, 103 bereitzustellen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Verbindungsvorrichtung
- 101: Erste fluidführende Leitung
- 103: Zweite fluidführende Leitung
- 105: Haltemanschette
- 107: Erster Leitungsabschnitt
- 109: Erster Verbindungsabschnitt
- 111: Zweiter Leitungsabschnitt
- 113: Zweiter Verbindungsabschnitt
- 115: Umlaufender Dichtungssteg
- 117: Weiterer umlaufender Dichtungssteg
- 119: Umlaufender Dichtungsring
- 121: Erste Haltevorsprünge
- 123: Zweite Haltevorsprünge
- 125: Erste Schlitze
- 127: Zweite Schlitze
- 129: Erste Verriegelungskontur
- 131: Zweite Verriegelungskontur
- 133: Erste Stabilisierungsstützen
- 135: Zweite Stabilisierungsstützen
- 137: Erste Sicherungsstifte
- 139: Zweite Sicherungsstifte
- 141: Erster Durchmesser
- 143: Weiterer erster Durchmesser
- 145: Zweiter Durchmesser
- 147: Weiterer zweiter Durchmesser
- 149: Stirnseite
- 151: Anschlag
- 153: Halteabstand

## Patentansprüche

1. Haltemanschette (105) für eine Verbindungsvorrichtung (100),
wobei die Haltemanschette (105) erste Haltevorsprünge (121) aufweist, welche in eine erste Verriegelungskontur (129) an der Außenseite einer ersten fluidführenden Leitung (101) eingreifbar ausgebildet sind, und
wobei die Haltemanschette (105) zweite Haltevorsprünge (123) aufweist, welche in eine zweite Verriegelungskontur (131) an der Außenseite einer zweiten fluidführenden Leitung (103) eingreifbar ausgebildet sind,
wobei die ersten Haltevorsprünge (121) in die erste Verriegelungskontur (129) und wobei die zweiten Haltevorsprünge (123) in die zweite Verriegelungskontur (131) eingreifbar ausgebildet sind, um eine axiale Verschiebung eines ersten Verbindungsabschnitts (109) der ersten fluidführenden Leitung (101) gegenüber einem zweiten Verbindungsabschnitt (113) der zweiten fluidführenden Leitung (101) zu begrenzen,
wobei zwischen den ersten Haltevorsprüngen (121) jeweils erste Schlitze (125) angeordnet sind, wobei zwischen den zweiten Haltevorsprüngen (123) jeweils zweite Schlitze (127) angeordnet sind,
**dadurch gekennzeichnet, dass** die ersten Haltevorsprünge (121) versetzt gegenüber den zweiten Haltevorsprüngen (123) angeordnet sind, und dass die ersten Schlitze (125) versetzt gegenüber den zweiten Schlitzen (127) angeordnet sind,
wobei die ersten Schlitze (125) auf Höhe der zweiten Haltevorsprünge (123) angeordnet sind und wobei die zweiten Schlitze (127) auf Höhe der ersten Haltevorsprünge (121) angeordnet sind.

2. Verbindungsvorrichtung (100) mit einer Haltemanschette (105) nach Anspruch 1 zum Verbinden von fluidführenden Leitungen (101, 103), mit:
einer ersten fluidführenden Leitung (101), welche einen ersten Verbindungsabschnitt (109) aufweist;
einer zweiten fluidführenden Leitung (103), welche einen zweiten Verbindungsabschnitt (113) aufweist, wobei der zweite Verbindungsabschnitt (113) in den ersten Verbindungsabschnitt (109) axial einführbar ist, um eine fluidtechnische Verbindung zwischen der ersten und zweiten fluidführenden Leitung (101, 103) bereitzustellen.

3. Haltemanschette (105) nach Anspruch 1 oder Verbindungsvorrichtung (100) nach Anspruch 2, wobei die Verbindungsabschnitte (109, 113) durch die Haltemanschette (105) verschiebbar fixiert sind.

4. Haltemanschette (105) nach Anspruch 1 oder Verbindungsvorrichtung (100) nach Anspruch 2 oder 3, wobei die Haltemanschette (105) als eine die erste und zweite fluidführende Leitung (101, 103) umlaufende Haltemanschette (105) ausgebildet ist, wobei die ersten Haltevorsprünge (121) und die zweiten Haltevorsprünge (123) auf entgegengesetzten Seiten der Haltemanschette (105) angeordnet sind.

5. Haltemanschette (105) nach Anspruch 1 oder Verbindungsvorrichtung (100) nach einem der vorangehenden Ansprüche 2 bis 4, wobei in den ersten und zweiten Schlitzen (125, 127) Kunststofflagen angeordnet sind, wobei die Kunststofflagen ausgebildet sind, die Schlitze (125, 127) gegenüber einer Außenseite der ersten fluidführenden Leitung (101) oder gegenüber einer Außenseite der zweiten fluidführenden Leitung (103) fluidtechnisch abzudichten, wobei die Kunststofflagen insbesondere ein thermoplastisches Elastomer (TPE) umfassen.

6. Haltemanschette (105) nach Anspruch 1 oder Verbindungsvorrichtung (100) nach einem der vorangehenden Ansprüche 2 bis 5, wobei die Verbindung zwischen den ersten Haltevorsprüngen (121) und der ersten Verriegelungskontur (129) oder die Verbindung zwischen den zweiten Haltevorsprüngen (123) und der zweiten Verriegelungskontur (131) als eine formschlüssige Verbindung, insbesondere als eine Rastverbindung, ausgebildet ist.

7. Haltemanschette (105) nach Anspruch 1 oder Verbindungsvorrichtung (100) nach einem der vorangehenden Ansprüche 2 bis 6, wobei der zweite Verbindungsabschnitt (113) an einer Außenseite einen umlaufenden Dichtungssteg (115) aufweist, wobei der umlaufende Dichtungssteg (115) an der dem ersten Verbindungsabschnitt (109) zugewandten Seite insbesondere abgerundet ist, und wobei der zweite Verbindungsabschnitt (113) an der Außenseite einen weiteren umlaufenden Dichtungssteg (117) aufweist, wobei zwischen dem umlaufenden Dichtungssteg (115) und dem weiteren umlaufenden Dichtungssteg (117) ein den zweiten Verbindungsabschnitt (113) umlaufender Dichtungsring (119) angeordnet ist.

8. Haltemanschette (105) nach Anspruch 1 oder Verbindungsvorrichtung (100) nach einem der vorangehenden Ansprüche 2 bis 7, wobei die Verbindungsvorrichtung (100) ferner einen Kunststoffschlauch umfasst, welcher über die mit dem ersten und zweiten Verbindungsabschnitt (109, 113) verbundene Haltemanschette (105) aufgezogen wird.

9. Haltemanschette (105) nach Anspruch 1 oder Verbindungsvorrichtung (100) nach einem der vorangehenden Ansprüche 2 bis 8, wobei die Haltemanschette (105) ferner eine Kunststoffdichtung aufweist, welche stoffschlüssig mit der Haltemanschette (105) verbunden ist, wobei die Kunststoffdichtung insbesondere ein thermoplastisches Elastomer (TPE) umfasst.

10. Haltemanschette (105) nach Anspruch 1 oder Verbindungsvorrichtung (100) nach einem der vorangehenden Ansprüche 2 bis 9, wobei die erste fluidführende Leitung (101) einen ersten Leitungsabschnitt (107) mit einem ersten Durchmesser (141) aufweist, wobei der erste Verbindungsabschnitt (109) einen weiteren ersten Durchmesser (143) aufweist, und wobei der weitere erste Durchmesser (143) größer als der erste Durchmesser (141) ist.

11. Haltemanschette (105) nach Anspruch 1 oder Verbindungsvorrichtung (100) nach einem der vorangehenden Ansprüche 2 bis 10, wobei die zweite fluidführende Leitung (103) einen zweiten Leitungsabschnitt (111) mit einem zweiten Durchmesser (145) aufweist, wobei der zweite Verbindungsabschnitt (113) einen weiteren zweiten Durchmesser (147) aufweist, wobei der weitere zweite Durchmesser (147) geringer als der zweite Durchmesser ist (145).

12. Haltemanschette (105) nach Anspruch 1 oder Verbindungsvorrichtung (100) nach einem der vorangehenden Ansprüche 2 bis 11, wobei der erste Verbindungsabschnitt (109) an einer Innenseite einen Anschlag (151) aufweist, wobei eine Stirnseite (149) des in den ersten Verbindungsabschnitt (109) eingeführten zweiten Verbindungsabschnitts, (113) an dem Anschlag (151) anliegt, um das Einschieben des zweiten Verbindungsabschnitts (113) in den ersten Verbindungsabschnitt (109) zu begrenzen.

13. Haltemanschette (105) nach Anspruch 1 oder Verbindungsvorrichtung (100) nach einem der vorangehenden Ansprüche 2 bis 12, wobei an der ersten Verriegelungskontur (129) erste Sicherungsstifte (137) angeordnet sind, wobei an der zweiten Verriegelungskontur (131) zweite Sicherungsstifte (139) angeordnet sind, und wobei die ersten und zweiten Sicherungsstifte (137, 139) ausgebildet sind, ein radiales Drehen der Haltemanschette (105) an der Verbindungsvorrichtung (100) zu verhindern.

14. Haltemanschette (105) nach Anspruch 1 oder Verbindungsvorrichtung (100) nach einem der vorangehenden Ansprüche 2 bis 13, wobei die Haltemanschette (105) einen thermoplastischen Kunststoff, insbesondere ein Polyamid, Nylon, Polyphenylensulfid oder Mischungen davon, umfasst.

## Claims

1. Retention collar (105) for a connecting device (100),
wherein the retention collar (105) comprises first retaining projections (121), which are designed to be engageable into a first locking contour (129) on the outside of a first fluid-conducting line (101), and
wherein the retention collar (105) comprises second retaining projections (123), which are designed to be engageable into a second locking contour (131) on the outside of a second fluid-conducting line (103),
wherein the first retaining projections (121) are designed to be engageable into the first locking contour (129) and wherein the second retaining projections (123) are designed to be engageable into the second locking contour (131) in order to limit an axial displacement of a first connecting section (109) of the first fluid-conducting line (101) relative to a second connecting section (113) of the second fluid-conducting line (101),
wherein first slots (125) are arranged between the first retaining projections (121), wherein second slots (127) are arranged between the second retaining projections (123),
**characterized in that** the first retaining projections (121) are arranged at an offset relative to the second retaining projections (123), and **in that** the first slots (125) are arranged at an offset relative to the second slots (127),
wherein the first slots (125) are arranged at the level of the second retaining projections (123) and wherein the second slots (127) are arranged at the level of the first retaining projections (121).

2. Connecting device (100) comprising a retention collar (105) according to claim 1 for connecting fluid-conducting lines (101, 103), the connecting device (100) comprising:
a first fluid-conducting line (101) comprising a first connecting section (109);
a second fluid-conducting line (103) comprising a second connection section (113), wherein the second connection section (113) is axially insertable into the first connection section (109) in order to provide a fluidic connection between the first and second fluid-conducting line (101, 103).

3. Retention collar (105) according to claim 1 or connecting device (100) according to claim 2, wherein the connecting sections (109, 113) are displaceably fixed by the retention collar (105).

4. Retention collar (105) according to claim 1 or connecting device (100) according to claim 2 or 3, wherein the retention collar (105) is designed as a retention collar (105) circumferenting the first and second fluid-conducting line (101, 103), wherein the first retaining projections (121) and the second retaining projections (123) are arranged on opposite sides of the retention collar (105).

5. Retention collar (105) according to claim 1 or connecting device (100) according to one of the preceding claims 2 to 4, wherein plastic layers are arranged in the first and second slots (125, 127), wherein the plastic layers are designed to fluidically seal the slots (125, 127) with respect to an outside of the first fluid-conducting line (101) or with respect to an outside of the second fluid-conducting line (103), wherein the plastic layers comprise in particular a thermoplastic elastomer (TPE).

6. Retention collar (105) according to claim 1 or connecting device (100) according to one of the preceding claims 2 to 5, wherein the connection between the first retaining projections (121) and the first locking contour (129) or the connection between the second retaining projections (123) and the second locking contour (131) is designed as an form-fitting connection, in particular a latching connection.

7. Retention collar (105) according to claim 1 or connecting device (100) according to one of the preceding claims 2 to 6, wherein the second connecting section (113) comprises a circumferential sealing web (115) on an outside, wherein the circumferential sealing web (115) is in particular rounded off on the side facing the first connection section (109), and wherein the second connection section (113) comprises a further circumferential sealing web (117) on the outside, wherein a sealing ring (119) circumferenting the second connecting section (113) is arranged between the circumferential sealing web (115) and the further circumferential sealing web (117).

8. Retention collar (105) according to claim 1 or connecting device (100) according to one of the preceding claims 2 to 7, wherein the connecting device (100) further comprises a plastic tube which is mounted over the retention collar (105) connected to the first and second connecting sections (109, 113).

9. Retention collar (105) according to claim 1 or connecting device (100) according to one of the preceding claims 2 to 8, wherein the retention collar (105) further comprises a plastic seal which is materially connected to the retention collar (105), wherein the plastic seal in particular comprises a thermoplastic elastomer (TPE).

10. Retention collar (105) according to claim 1 or connecting device (100) according to one of the preceding claims 2 to 9, wherein the first fluid-conducting line (101) comprises a first line section (107) comprising a first diameter (141), wherein the first connection section (109) comprises a further first diameter (143), and wherein the further first diameter (143) is greater than the first diameter (141).

11. Retention collar (105) according to claim 1 or connecting device (100) according to one of the preceding claims 2 to 10, wherein the second fluid-conducting line (103) comprises a second line section (111) comprising a second diameter (145), wherein the second connection section (113) comprises a further second diameter (147), wherein the further second diameter (147) is smaller than the second diameter (145).

12. Retention collar (105) according to claim 1 or connecting device (100) according to one of the preceding claims 2 to 11, wherein the first connecting section (109) comprises a stop (151) on an inside, wherein an end face (149) of the second connecting section (113), which is inserted into the first connecting section (109) and abuts the stop (151) in order to limit the insertion of the second connecting section (113) into the first connecting section (109).

13. Retention collar (105) according to claim 1 or connecting device (100) according to one of the preceding claims 2 to 12, wherein first locking pins (137) are arranged at the first locking contour (129), wherein second locking pins (131) are arranged at the second locking contour (131), and wherein the first and second locking pins (137, 139) are designed to prevent a radial rotation of the retention collar (105) at the connecting device (100).

14. Retention collar (105) according to claim 1 or connecting device (100) according to one of the preceding claims 2 to 13, wherein the retention collar (105) comprises a thermoplastic plastic, in particular a polyamide, nylon, polyphenylene sulfide or mixtures thereof.

## Revendications

1. Manchon de maintien (105) pour un dispositif de liaison (100),
le manchon de maintien (105) comprenant des premières saillies de maintien (121), lesquelles sont réalisées de manière à pouvoir venir en prise dans un premier contour de verrouillage (129) sur le côté extérieur d'une première conduite (101) acheminant un fluide, et
le manchon de maintien (105) comprenant des deuxièmes saillies de maintien (123), lesquelles sont réalisées de manière à pouvoir venir en prise dans un deuxième contour de verrouillage (131) sur le côté extérieur d'une deuxième conduite (103) acheminant un fluide,
les premières saillies de maintien (121) étant réalisées de manière à pouvoir venir en prise dans le premier contour de verrouillage (129) et les deuxièmes saillies de maintien (123) étant réalisées de manière à pouvoir venir en prise dans le deuxième contour de verrouillage (131), afin de limiter un déplacement axial d'une première partie de liaison (109) de la première conduite (101) acheminant un fluide par rapport à une deuxième partie de liaison (113) de la deuxième conduite (101) acheminant un fluide,
des premières fentes (125) étant respectivement disposées entre les premières saillies de maintien (121), des deuxièmes fentes (127) étant respectivement disposées entre les deuxièmes saillies de maintien (123), **caractérisé en ce que** les premières saillies de maintien (121) sont disposées de manière décalée par rapport aux deuxièmes saillies de maintien (123), et **en ce que** les premières fentes (125) sont disposées de manière décalée par rapport aux deuxièmes fentes (127),
les premières fentes (125) étant disposées à hauteur des deuxièmes saillies de maintien (123) et les deuxièmes fentes (127) étant disposées à hauteur des premières saillies de maintien (121).

2. Dispositif de liaison (100) comportant un manchon de maintien (105) selon la revendication 1 pour la liaison de conduites (101, 103) acheminant un fluide, comportant :
une première conduite (101) acheminant un fluide, laquelle comprend une première partie de liaison (109) ; une deuxième conduite (103) acheminant un fluide, laquelle comprend une deuxième partie de liaison (113), la deuxième partie de liaison (113) pouvant être insérée axialement dans la première partie de liaison (109), afin de produire une liaison fluidique entre la première et la deuxième conduite (101, 103) acheminant un fluide.

3. Manchon de maintien (105) selon la revendication 1 ou dispositif de liaison (100) selon la revendication 2, les parties de liaison (109, 113) étant fixées de manière déplaçable au moyen du manchon de maintien (105).

4. Manchon de maintien (105) selon la revendication 1 ou dispositif de liaison (100) selon la revendication 2 ou 3, le manchon de maintien (105) étant réalisé sous la forme d'un manchon de maintien (105) s'étendant autour de la première et de la deuxième conduite (101, 103) acheminant un fluide, les premières saillies de maintien (121) et les deuxièmes saillies de maintien (123) étant disposées sur des côtés opposés du manchon de maintien (105) .

5. Manchon de maintien (105) selon la revendication 1 ou dispositif de liaison (100) selon l'une des revendications précédentes 2 à 4, des couches en matière synthétique étant disposées dans les premières et deuxièmes fentes (125, 127), les couches en matière synthétique étant réalisées pour assurer l'étanchéité fluidique des fentes (125, 127) par rapport à un côté extérieur de la première conduite (101) acheminant un fluide ou par rapport à un côté extérieur de la deuxième conduite (103) acheminant un fluide, les couches en matière synthétique comportant en particulier un élastomère thermoplastique (TPE).

6. Manchon de maintien (105) selon la revendication 1 ou dispositif de liaison (100) selon l'une des revendications précédentes 2 à 5, la liaison entre les premières saillies de maintien (121) et le premier contour de verrouillage (129) ou la liaison entre les deuxièmes saillies de maintien (123) et le deuxième contour de verrouillage (131) étant réalisée comme liaison par complémentarité de forme, en particulier comme liaison par encliquetage.

7. Manchon de maintien (105) selon la revendication 1 ou dispositif de liaison (100) selon l'une des revendications précédentes 2 à 6, la deuxième partie de liaison (113) comprenant une nervure d'étanchéité périphérique (115) sur un côté extérieur, la nervure d'étanchéité périphérique (115) étant en particulier arrondie sur le côté tourné vers la première partie de liaison (109), et la deuxième partie de liaison (113) comprenant une autre nervure d'étanchéité périphérique (117) sur le côté extérieur, une bague d'étanchéité (119) s'étendant autour de la deuxième partie de liaison (113) étant disposée entre la nervure d'étanchéité périphérique (115) et l'autre nervure d'étanchéité périphérique (117).

8. Manchon de maintien (105) selon la revendication 1 ou dispositif de liaison (100) selon l'une des revendications précédentes 2 à 7, le dispositif de liaison (100) comportant en outre un tuyau en matière synthétique, lequel est enfilé sur le manchon de maintien (105) relié à la première et à la deuxième partie de liaison (109, 113).

9. Manchon de maintien (105) selon la revendication 1 ou dispositif de liaison (100) selon l'une des revendications précédentes 2 à 8, le manchon de maintien (105) comprenant en outre un joint d'étanchéité en matière synthétique, lequel est relié par liaison de matière au manchon de maintien (105), le joint d'étanchéité en matière synthétique comportant en particulier un élastomère thermoplastique (TPE).

10. Manchon de maintien (105) selon la revendication 1 ou dispositif de liaison (100) selon l'une des revendications précédentes 2 à 9, la première conduite (101) acheminant un fluide comprenant une première partie de conduite (107) présentant un premier diamètre (141), la première partie de liaison (109) présentant un autre premier diamètre (143), et l'autre premier diamètre (143) étant supérieur au premier diamètre (141).

11. Manchon de maintien (105) selon la revendication 1 ou dispositif de liaison (100) selon l'une des revendications précédentes 2 à 10, la deuxième conduite (103) acheminant un fluide comprenant une deuxième partie de conduite (111) présentant un deuxième diamètre (145), la deuxième partie de liaison (113) présentant un autre deuxième diamètre (147), l'autre deuxième diamètre (147) étant inférieur au deuxième diamètre (145).

12. Manchon de maintien (105) selon la revendication 1 ou dispositif de liaison (100) selon l'une des revendications précédentes 2 à 11, la première partie de liaison (109) comprenant une butée (151) sur un côté intérieur, un côté frontal (149) de la deuxième partie de liaison (113) insérée dans la première partie de liaison (109) s'appuyant contre la butée (151), afin de limiter l'introduction de la deuxième partie de liaison (113) dans la première partie de liaison (109).

13. Manchon de maintien (105) selon la revendication 1 ou dispositif de liaison (100) selon l'une des revendications précédentes 2 à 12, des premières goupilles de fixation (137) étant disposées sur le premier contour de verrouillage (129), des deuxièmes goupilles de fixation (139) étant disposées sur le deuxième contour de verrouillage (131), et les premières et deuxième goupilles de fixation (137, 139) étant réalisées pour empêcher une rotation radiale du manchon de maintien (105) sur le dispositif de liaison (100).

14. Manchon de maintien (105) selon la revendication 1 ou dispositif de liaison (100) selon l'une des revendications précédentes 2 à 13, le manchon de maintien (105) comportant une matière synthétique thermoplastique, en particulier un polyamide, du nylon, du polysulfure de phénylène ou des mélanges de ceux-ci.
